# EUROPEAN PATENT APPLICATION

(11) **EP 2 647 602 A1**
(43) Date of publication of application: **09.10.2013**
(21) Application number: 11845032.9
(22) Date of filing: 30.11.2011
(51) Int. Cl.: C03B 5/173, C03B 3/02, C03B 5/04, C03B 5/235, C03B 7/02, F27B 3/20

(54) **GLASS MELTER, MODIFICATION METHOD FOR GLASS BLANK, PRODUCTION METHOD FOR MOLTEN GLASS, PRODUCTION METHOD FOR GLASSWARE, AND PRODUCTION APPARATUS FOR GLASSWARE**

(30) Priority: 02.12.2010 JP 2010269643
(71) Applicant: Asahi Glass Company, Limited, Tokyo 100-8405 (JP)
(72) Inventor: ISHIKAWA, Yutaka, Tokyo 100-8405 (JP); TANAKA, Chikao, Tokyo 100-8405 (JP)
(74) Representative: Müller-Boré & Partner Patentanwälte
(86) International application number: PCT/JP2011/077705
(87) International publication number: WO 2012/074023

(57) **Abstract**

Objective of the present invention is to provide a glass melting furnace, a process for modifying a glass melt and a process for producing glass melt, whereby composition-modified glass melt containing an additive component at a high concentration can be produced with an excellent quality. The glass melting furnace 10 of the present invention is a glass melting furnace 10 for adding an additive to a molten state glass to form composition-modified glass melt, discharging the composition-modified glass melt, and a forehearth 20, said forehearth comprising a feed portion to feed an additive, and a heating means to form a heating gas phase portion above the liquid surface of the glass melt to convert the additive from the feed portion into melted particles of additive below the feed portion.

## Description

### TECHNICAL FIELD

The present invention relates to a glass melting furnace, a process for modifying a glass melt, a process for producing glass melt, a process for producing a glass product, and an apparatus for producing a glass product.

### BACKGROUND ART

Along with a worldwide demand for reducing CO₂ and a demand for saving energy in recent years, automobile windows, etc. tend to be deep-colored in order to shield solar radiation heat. This is intended to reduce heat energy entering into a car thereby to prevent an increase of the temperature in the car and improve the air conditioning efficiency and thus to reduce the level of greenhouse gas emissions. Especially in recent years, glass having an extremely high heat-shielding property has been demanded.

In order to increase the heat-shielding property of glass, there has been a measure to provide a reflective film on the surface of glass, but insufficient strength and durability of the film, or a strong reflection, has been problematic in many cases, and accordingly, a measure is also desired to improve the heat absorption by changing the glass composition by adding a colorant component to base glass.

Production of colored glass is usually carried out by changing the composition of glass raw material to be fed upstream in a melting tank. However, in such a method, in a case where precedent production of a colored glass is followed by production of another colored glass with a different composition, it is necessary to withdraw the previous colored glass from the melting tank, and glass with an intermediate color during the replacement is wasted without being utilized, and further, there is a problem such that it takes a long time for the color change.

Therefore, a method has been proposed to feed cullet as a colorant downstream in the melting tank after melting base glass constituting the majority of the composition of the glass raw material in the melting tank (e.g. Patent Documents 1 to 3).

Fig. 8 shows a batch material melting apparatus disclosed in Patent Document 1. In Fig. 8, arrows A, B, C, D and E represent directions in which glass flows in the entire apparatus. This batch material melting apparatus 100 comprises a module 111 being a melting chamber 101 for electric melting (electric melting by a heating means in the form of submerged electrodes) and/or fuel combustion type melting (melting by a heating means in the form of a ceiling combustion burner), a module 112 being a melting chamber 102 equipped with a submerged burner, a module 113 being a mixing chamber 103 in communication with the melting chamber 101 via a transfer duct 104 and in communication with the melting chamber 102 via a transfer duct 105, and a transfer duct 106 to let this module 113 communicate with a downstream apparatus. In this melting apparatus 100, glass melt melted in the melting chamber 101 and glass melt melted in the melting chamber 102 are mixed and homogenized in the module 113 and permitted to flow downstream through the transfer duct 106. With this melting apparatus 100, by using the melting chamber 102 in order to control the composition of glass coming from the melting chamber 101, it is possible to change, for example, the viscosity characteristics, the redox characteristics or the spectroscopic characteristics of glass after the mixing.

According to the technique disclosed in Patent Document 2, an auxiliary tank is disposed above glass melt inside of a furnace, frit having a highly concentrated additive is introduced into this auxiliary tank, and the frit is heated and melted by a gas stream from a supply device, so that the molten frit flows into the glass melt.

According to the technique disclosed in Patent Document 3, to base glass melted in a melting zone in a glass melting furnace, a reforming material is added from a supply device disposed at a downstream waist portion (throat) in the glass melting furnace. In the technique disclosed in Patent Document 3, an example of the supply device has such a construction that a vertical tube is disposed against horizontally flowing molten base glass, and through this vertical tube, the reforming material is supplied. Further, also disclosed is a construction wherein the reforming material is melted by e.g. an electrical heating method in a hollow melting container connected to the supply device and then supplied to the molten base glass.

### PRIOR ART DOCUMENTS

### PATENT DOCUMENTS

Patent Document 1: JP-A-2005-510439
Patent Document 2: JP-A-49-31725
Patent Document 3: JP-A-11-513972

### DISCLOSURE OF INVENTION

### TECHNICAL PROBLEM

However, as a result of a study conducted by the present inventors, it has been found that by a usual melting method employing a combustion burner, it is difficult to homogeneously melt glass containing a colorant at a high concentration as required by an energy saving measure in recent years. That is, in a case where glass raw material is to be melted by radiation heat of a combustion burner, the heat-ray absorption of the colorant contained in glass is so high that heat ray tends to be absorbed by an upper layer of glass melt containing the colorant, and consequently, no adequate radiation heat can be transferred to glass melt at the bottom of the melting tank. Although it is technically possible to input a large amount of energy to set the melting tank at a high temperature thereby to melt colorant-containing glass, energy consumption will thereby be increased, and a large installation will thereby be required. Further, as mentioned above, in the case of glass containing a colorant, radiation heat transfer tends to be limited, and accordingly, it tends to be difficult to maintain colorant-containing glass melt at a predetermined temperature, and the glass melt at the tank bottom is likely to cool down.

For example, when it is tried to design glass for ultrahigh heat-shielding automobile roof windows, at least 3 to 5% of an iron oxide component is required as a colorant in the glass. With respect to the case of melting glass having such a composition, the present inventors have conducted a study by simulation. As a result, it has been found that while glass melted in a melting tank is usually cooled to a temperature (at a level of 1,300°C) suitable for the subsequent step of e.g. forming, in the case of the glass having the above composition, glass melt at the tank bottom tends to be cooled too much in such a cooling step, whereby a stagnant region is likely to be formed where glass melt tends to stay without flowing. Once such a stagnant region is formed, not only it takes long time to replace the glass melt in order to produce glass having another composition, but also it is likely to cause ream defects or bubble defects, if different glass melt partly flows. Further, if at a stagnant region in a cooling tank or a melting step, a non-flowing glass melt region is formed where the glass melt temperature cannot be raised, the volume contributing to the refining process of glass melt remarkably decreases, whereby the product quality and productivity tend to be substantially decreased, or the production becomes impossible.

Also commonly known is a case wherein electric melting is utilized in order to raise the temperature of glass melt stagnant at a low temperature in a lower layer of the glass melt, and also on such a case, the present inventors have conducted a study by simulation. As a result, it is considered difficult to uniformly electrically heat the lower layer portion of glass melt in e.g. a cooling tank, which is especially likely to cool down to a low temperature, is close to a forming step and is highly influential over the quality of a glass product to be produced.

On the other hand, a method of using an electric melting furnace which does not require radiation heating from an upper portion, may be a candidate for the method for melting deep-colored glass of this type. Also in this method, however, it is considered likewise likely that heat deficiency results in a cooling tank or flow channel to send glass melted in the electric melting furnace to a subsequent step, and cooling down to a low temperature or stagnation of glass melt near the tank bottom will take place.

Whereas, like the technique disclosed in the above-mentioned Patent Documents 1 to 3, in order to produce deep-colored glass containing a colorant at a concentration as high as from 3 to 5% by a method of feeding cullet as a colorant (hereinafter referred to also as colorant cullet) to molten base glass, it is required to feed the colorant cullet in an amount of from ten to a few tens % to the base glass, for example, in the case of employing colorant cullet containing a few tens % of the colorant. Like the technique disclosed in Patent Documents 1 to 3, by heating by means of a submerged burner, heated gas stream, electrical means, etc., it is difficult to melt the cullet containing a colorant at such a high concentration, and, even if such melting were possible, in a case where the cullet once cooled, is to be reheated, the temperature of the colorant cullet would be about a few 100°C i.e. far lower than the temperature of base glass. For example, in a case where colorant cullet of 300°C is fed 10% to base glass of 1,300°C, the temperature of the entire glass will decrease by about 100°C. By this temperature decrease, the viscosity of the glass melt will increase, whereby stirring tends to be difficult, and it becomes difficult to homogeneously stir the distributed low temperature colorant cullet.

In the technique disclosed in Patent Document 1, as shown in Fig. 8, a melting chamber 102 is required to melt the additive such as a colorant, whereby the installation tends to be large in scale. Further, in a case where in the same melting chamber 102, another colored glass is to be produced, it is required to completely remove the colorant in the melting chamber 102, and it takes long time for such color change. Therefore, such a technique is not suitable for the production of colored glass where production of various sorts in small quantities is required. Further, in the submerged melting method by means of a submerged burner in the melting chamber 102, combustion by the burner is conducted in the glass melt, the additive such as the molten colorant is likely to include a large amount of bubbles, whereby bubbles are likely to be included in a glass product to be produced.

In view of the forgoing background, the present invention has an object to provide a glass melting furnace, a process for modifying a glass melt and a process for producing glass melt, which are capable of producing composition-modified glass melt containing an additive component at a high concentration with an excellent quality.

Further, the present invention has an object to provide a process for producing a glass product using the above-mentioned process for producing glass melt.

Still further, the present invention has an object to provide an apparatus for producing a glass product, which is provided with the above-mentioned glass melting furnace.

### SOLUTION TO PROBLEM

The present invention provides a glass melting furnace for adding an additive to a molten state glass melt to form composition-modified glass melt and discharging the composition-modified glass melt, which comprises:
a melting tank for melting glass raw material to form a molten state glass melt,
a forehearth in communication with the melting tank to introduce the glass melt from the melting tank and transport it to a discharge portion, said forehearth comprising a feed portion to feed an additive, and a heating means to form a heating gas phase portion above the liquid surface of the glass melt to convert the additive from the feed portion into melted particles of additive below the feed portion.

Here, glass melt is meant for glass having a base glass composition (referred to also as a base glass composition) before adding the additive. However, molten state glass melt may sometimes be referred to simply as glass melt.

Modifying means that to a molten state glass melt, an additive in a smaller amount than the mass of the glass melt is added, and it is mixed and homogenized in the glass melt to modify the composition of the base glass thereby to impart a new function. From another viewpoint, modifying means that by a relatively small change in the glass composition by the additive, it is made possible to detect the characteristics of a glass product.

Composition-modified glass melt is meant for glass melt after its modification by addition of the additive and one having a glass composition which will be a glass product.

In the glass melting furnace of the present invention, the heating means is preferably either one or both of an oxygen combustion burner to generate an oxygen combustion flame and a multi-phase arc plasma generation apparatus constituted by at least a pair of electrodes to generate thermal plasma.

In the glass melting furnace of the present invention, the oxygen combustion burner may be provided with a supply channel for additive as the above feed portion.

In the glass melting furnace of the present invention, the distance between the front end of the oxygen combustion burner and the liquid surface position of the glass melt in the forehearth is preferably at least a length required to convert the additive from the feed portion into melted particles of additive by the heating gas phase portion.

In the glass melting furnace of the present invention, an upwardly protruded ceiling protrusion may be formed at the ceiling of the forehearth, and the feed portion and the heating means may be installed in the ceiling protrusion.

The glass melting furnace of the present invention may have, in the forehearth, a stirring means on the discharge portion side to the installation position of the feed portion.

Further, the present invention provides a process for modifying a glass melt by adding an additive to a molten state glass melt to modify the glass melt, which comprises:
a step of melting glass raw material to form a glass melt, and
a step of feeding an additive into a heating gas phase portion above the liquid surface of the glass melt to melt the additive to form melted particles of additive, and adding the melted particles of additive to the glass melt to modify the composition of glass.

In the process for modifying a glass melt of the present invention, the heating gas phase portion is preferably formed by either one or both of an oxygen combustion burner to generate an oxygen combustion flame and a multi-phase arc plasma generation apparatus constituted by at least a pair of electrodes to generate thermal plasma.

In the process for modifying a glass melt of the present invention, the heating gas phase portion may be formed by the oxygen combustion burner having a supply channel for additive internally provided, and the additive may be fed from the supply channel for additive to the heating gas phase portion.

In the process for modifying a glass melt of the present invention, the front end position of the oxygen combustion burner is preferably set against the liquid surface position of the glass melt at a height required to convert the additive into the melted particles of additive by the heating gas phase portion.

In the process for modifying a glass melt of the present invention, the average particle diameter of the additive is preferably at most 1 mm by weight average.

In the process for modifying a glass melt of the present invention, the additive may contain a colorant component, and the amount of the colorant component may be from 0.1 to 20 mass% to 100 mass% of the glass melt.

In the process for modifying a glass melt of the present invention, the additive may be a granule having additive raw material mixed.

In the process for modifying a glass melt of the present invention, the additive may be glass frit containing a modification component.

In the process for modifying a glass melt of the present invention, the additive may contain one sort or plural sorts of oxides.

In the process for modifying a glass melt of the present invention, the step of melting glass raw material to form a glass melt may be a step by an in-flight melting method of melting the glass raw material in a heating gas phase.

The present invention provides a process for producing glass melt, which comprises producing composition-modified glass melt by using the above process for modifying a glass melt.

Further, the present invention provides a process for producing a glass product, which comprises a step of producing glass melt by using the above process for producing glass melt, a step of forming the glass melt, and a step of annealing the glass after the forming.

Still further, the present invention provides an apparatus for producing a glass product, which comprises the above glass melting furnace, a forming means for forming composition-modified glass melt produced by the glass melting furnace, and an annealing means for annealing the glass after the forming.

### ADVANTAGEOUS EFFECTS OF INVENTION

As is different from conventional apparatus, the glass melting furnace of the present invention does not require a furnace to preliminarily melt the additive, and an additive melting unit comprising a feed portion and a heating means may simply be installed in a forehearth of a conventional melting furnace, whereby the installation is simple. Further, a furnace to melt the additive is not separately required, and it is not required to change the composition of the base glass raw material which is fed upstream in the melting tank. Accordingly, as is different from conventional apparatus, it is not required to remove entire glass melt from the tank at the time of color change, and color change may be accomplished in a short time.

With the glass melting furnace of the present invention, in the case of producing composition-modified glass melt having another composition, it is simply required to change the sort of the additive to be fed to the feed portion, or to replace the additive melting unit. Therefore, it is suitable also for the production of colored glass such as glass for bottles, where it is required to cope with production of various sorts in small quantities.

According to the process for modifying glass melt and the process for producing glass melt of the present invention, the additive can be instantaneously melted in the heating gas phase portion, and it is possible to melt an additive containing a large amount of a colorant component which used to be difficult to melt heretofore. Further, melted particles of additive melted in the heating gas phase portion will descend and will be dispersed on the glass melt flowing in the forehearth, whereby the melted particles of additive tend to be readily melted into the glass melt, and it is possible to produce homogeneous composition-modified glass melt.

In the process for modifying glass melt and the process for producing glass melt of the present invention, the additive is melted in the heating gas phase portion at a high temperature, whereby the temperature of melted particles of additive can be made to be equal to or higher than the temperature (e.g. about 1,350°C) of the glass melt flowing in the forehearth. Therefore, stirring can be facilitated without lowering the temperature of the glass melt, and it is possible to produce composition-modified glass melt having a homogeneous composition. Further, by adjusting the temperature of the heating gas phase portion, it is possible to freely adjust the temperature of melted particles of additive, and it is possible to form melted particles of additive having a temperature or viscosity which is advantageous for mixing with the glass melt. Further, the temperature of the melted particles of additive can be set to be sufficiently high so that the viscosity of the melted particles of additive be made low, whereby it is less likely to include bubbles at the time of mixing and stirring with the glass melt, and it is possible to obtain composition-modified glass melt having an excellent quality free from bubbles.

In the process for modifying glass melt and the process for producing glass melt of the present invention, the additive is instantaneously melted in the heating gas phase portion, whereby as compared with a conventional production method, it is possible to shorten the production time, and it is possible to reduce energy consumption and to reduce exhaust gas.

According to the process for producing a glass product of the present invention, the above-described process for producing glass melt is used, whereby even in a case where the additive contains a modification component at a high concentration, it is possible to provide a homogeneous high quality glass product.

Further, the apparatus for producing a glass product of the present invention is provided with the above-described glass melting furnace, whereby it is possible to produce a homogeneous high quality glass product in a small scale as compared with conventional apparatus for producing composition-modified glass without adding a melting tank for modification.

### BRIEF DESCRIPTION OF DRAWINGS

Fig. 1 is a vertical cross-sectional view schematically illustrating one embodiment of the glass melting furnace according to the present invention.
Fig. 2(a) is a vertical cross-sectional view of a forehearth of the glass melting furnace shown in Fig. 1, and Fig. 2(b) is a horizontal cross-sectional view of the main part of the forehearth excluding the ceiling portion.
Fig. 3(a) is a cross-sectional schematic view along line A-A' of the forehearth shown in Fig. 2(b), and Fig. 3(b) is a cross-sectional schematic view along line B-B' of the same forehearth.
Fig. 4 is a vertical cross-sectional view illustrating an example of the structure of an oxygen combustion burner provided in the forehearth of the glass melting furnace shown in Fig. 1.
Fig. 5 is a vertical cross-sectional view schematically illustrating another embodiment of the glass melting furnace according to the present invention.
Fig. 6 is a vertical cross-sectional view schematically illustrating another embodiment of the glass melting furnace according to the present invention.
Fig. 7 is a flow chart showing an example of the process for producing a glass product by using the process for melting glass raw material according to the present invention.
Fig. 8 is a schematic view illustrating the construction of a conventional batch material melting apparatus.

### DESCRIPTION OF EMBODIMENTS

Now, with reference to the accompanying drawings, embodiments of the glass melting furnace, the process for modifying a glass melt, the process for producing glass melt, the process for producing a glass product and the apparatus for producing a glass product of the present invention will be described. However, it should be understood that the present invention is by no means restricted to the following embodiments.

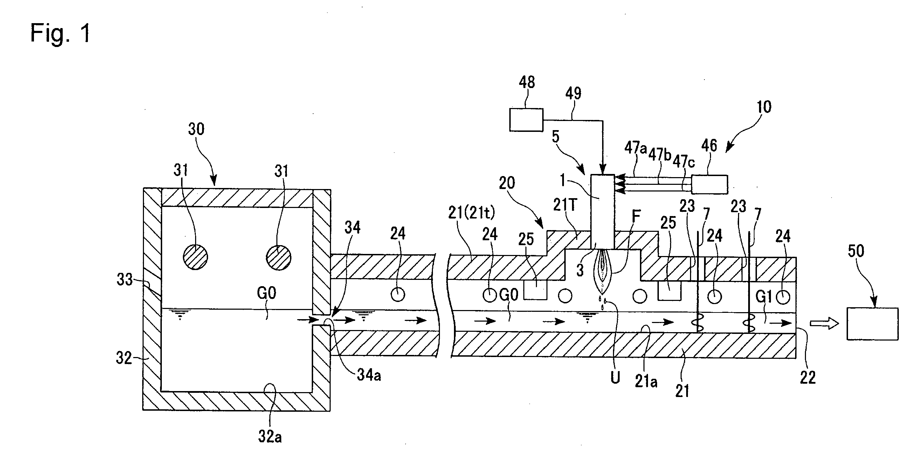

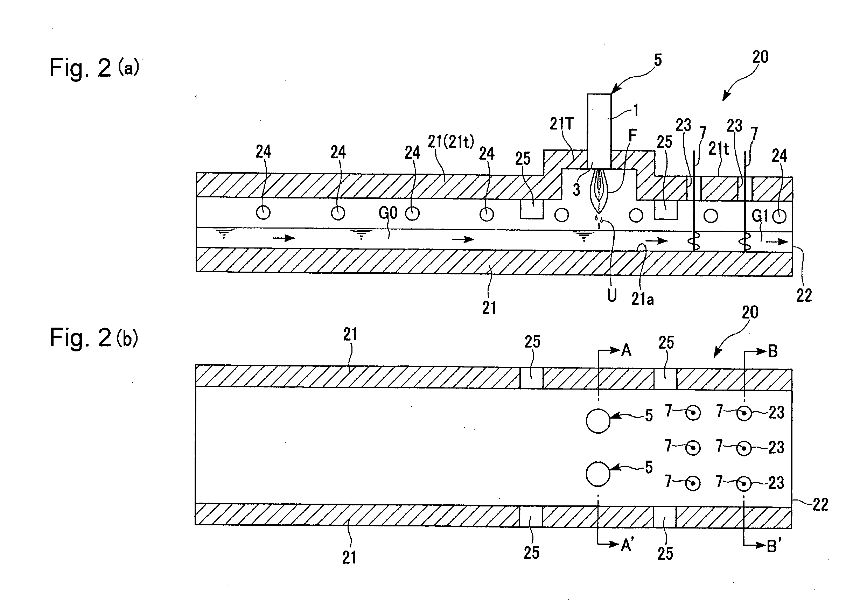

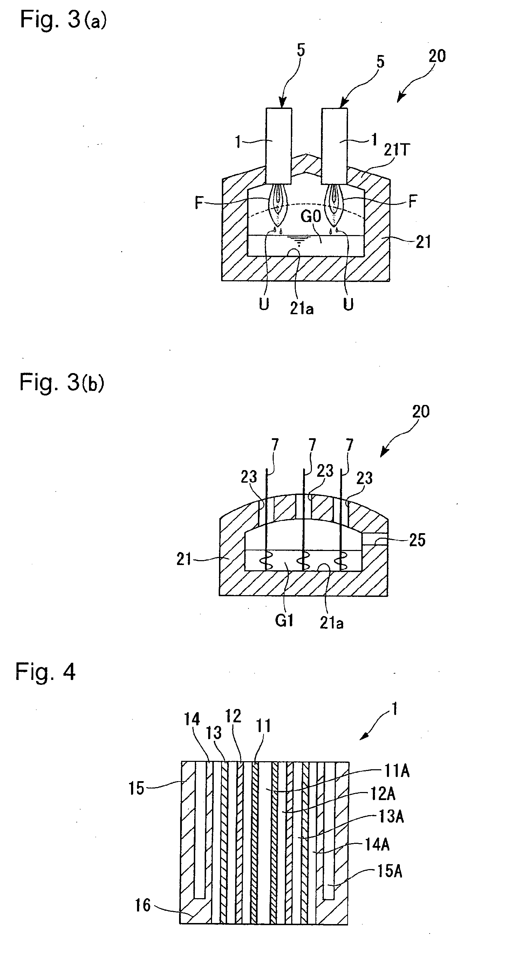

Fig. 1 is a vertical cross-sectional view schematically illustrating one embodiment of the glass melting furnace according to the present invention. Fig. 2(a) is a vertical cross-sectional view of a forehearth of the glass melting furnace shown in Fig. 1, and Fig. 2(b) is a horizontal cross-sectional view of the main part of the forehearth excluding the ceiling portion. Fig. 3(a) is a cross-sectional schematic view along line A-A' of the forehearth shown in Fig. 2(b), and Fig. 3(b) is a cross-sectional schematic view along line B-B' of the same forehearth. The glass melting furnace shown in Figs. 1 to 3 is to be used for the process for modifying a glass melt and the process for producing glass melt according to the present invention.

The glass melting furnace 10 of this embodiment as shown in Fig. 1, comprises a melting tank 30 and a forehearth 20, and the melting tank 30 and the forehearth 20 are in communication with each other via a connection portion (throat) 34. The glass melt melted by the melting tank 20 is introduced from the connection portion 34 to the forehearth 20. The introduced glass melt is cooled (or adjusted) in the forehearth 20 to a temperature suitable for e.g. a subsequent forming step and discharged to a forming apparatus 50 side from a discharge port 22 as the discharge portion. Further, as the case requires, a degassing apparatus may be disposed between the forehearth 20 and the forming apparatus 50 to improve the bubble-free quality.

The melting tank 30 comprises a hollow furnace body 32 made of refractory bricks, combustion burners 31 disposed at an upper portion in the furnace body 32 so that the flame injecting direction becomes transverse, a raw material feed portion 33 to feed raw material for glass melt, and a connection portion 34 to discharge a glass melt G0 (hereinafter sometimes referred to simply as "glass melt G0") melted in the furnace body 32 to the forehearth 20. In the melting tank 30, a batch of glass raw material fed from the raw material feed portion 33 is melted by radiation heat by flame of the combustion burners 31 installed on the wall of the furnace body 32 and will be retained as a glass melt G0 at the furnace bottom 32a. In the furnace body 32, a heating means (not shown) such as electrodes may be disposed at the furnace bottom 32a, as the case requires, and so constructed that the glass melt G0 retained at the furnace bottom 32a can be maintained in a molten state at the desired temperature (e.g. from about 1,400 to 1,500°C).

The bottom 34a of the connection portion 34 is located at a position higher than the bottom 21 a of the after-described forehearth 20, whereby the glass melt G0 melted in the melting tank 30 is prevented from flowing back to the melting tank 30 side after introduced to the forehearth, and one direction flow from the melting tank 30 to the discharge port 22 of the forehearth 20 is established.

As the combustion burners 31, conventional combustion burners may be employed, and oxygen combustion burners having fuel and combustion gas-supply nozzles properly disposed may, for example, be used.

The forehearth 20 is tubular as enclosed by a furnace wall 21 made of refractory bricks, and its cross-sectional shape may be any shape such as a circular, oval, rectangular or atypical shape. The height and width of the forehearth 20 are usually set to be less than those of the melting tank 30, and the bottom 21 a of the forehearth 20 is set to be higher than the bottom 32a of the melting tank 30.

Here, in an apparatus for producing a glass sheet by e.g. a float process, a refining agent tank for glass melt, which is designed to have a narrower width and shallower bottom than a melting tank and installed in succession to the melting tank for a step of letting glass melt flow from the glass melting tank to a float bath as a forming apparatus, is also referred to as a forehearth. In this case, a tunnel-form connecting portion 34 to separate the melting tank and the refining agent tank and to control the flow rate, may not be provided.

The ceiling wall 21t of the forehearth 20 is designed so that a part thereof is set to be higher than the rest, and at such a ceiling protrusion 21T set to be higher, two oxygen combustion burners 1 are installed adjacent to each other in the width direction of the forehearth 20 through the ceiling protrusion 21T so that the flame-injecting direction be downward. The ceiling wall 21t and the ceiling protrusion 21T constitute the ceiling of the forehearth 20.

The feed portion to feed the additive to the heating gas phase portion is integrally formed in the oxygen combustion burner 1, and in the vicinity of the outlet of the oxygen combustion burner, a tube to supply combustion gas, a tube to supply oxygen and a tube to supply the additive, are concentrically disposed. Such a combination of the feed portion and the oxygen combustion burner 1 will be referred to as "additive melting unit". As described hereinafter, in this embodiment, a supply channel for additive 12A integrally formed with the oxygen combustion burner 1 constitutes the feed portion.

In the forehearth 20 of the glass melting furnace 10 in this embodiment, the heating means to form a heating gas phase portion is constituted by the oxygen combustion burners 1. The heating gas phase portion is constituted by a high temperature portion in the flame (hereinafter referred to also as the oxygen combustion flame or combustion flame) F of the oxygen combustion burners 1 and in the vicinity of the flame F.

The oxygen combustion burner 1 is an oxygen combustion burner which is known as a burner for heating an inorganic powder and which has nozzles for supplying a raw material (an additive), a fuel gas and a combustion gas properly disposed. Fig. 4 shows an example of the structure of the oxygen combustion burner 1 provided in the glass melting furnace in this embodiment. However, the structure of the oxygen combustion burner in the present invention is not limited to the one shown in the following example.

The oxygen combustion burner 1 shown in Fig. 4 has a multi-tubular structure wherein a plurality of tubular nozzles 11, 12, 13, 14 and outer tube 15 are concentrically disposed, and it is constituted by the first nozzle 11 disposed at the center and the second nozzle 12, the third nozzle 13, the fourth nozzle 14 and the outer tube 15 sequentially disposed outside of this first nozzle 11 to surround the first nozzle 11.

Inside of the first nozzle 11, a fuel gas supply channel 11A is formed to let a fuel gas pass therethrough, and between the first nozzle 11 and the second nozzle 12, a supply channel for additive 12A (i.e. a feed portion) is formed to let an additive pass therethrough. Further, between the second nozzle 12 and the third nozzle 13, a primary combustion gas supply channel 13A is formed to let a combustion gas pass therethrough, between the third nozzle 13 and the fourth nozzle 14, a secondary combustion gas supply channel 14A is formed to let a combustion gas pass therethrough, and between the fourth nozzle 14 and the outer tube 15, a cooling medium channel 15A is formed to let a cooling medium such as water flow.

The fourth nozzle 14 and the outer tube 15 are connected by a connection portion 16 at their front ends, and the front end side of the cooling medium channel 15A is closed by this connection portion 16. The cooling medium channel 15A is provided to extend near the front ends of the respective nozzles 11 to 14 so that the respective nozzles 11 to 14 can sufficiently be cooled. It is thereby possible to prevent the respective nozzles 11 to 14 from becoming an overheated state.

In the oxygen combustion burner 1, a fuel gas such as propane, butane, methane, LPG (liquefied petroleum gas), hydrogen, heavy oil, light oil or kerosene is introduced to the fuel gas supply channel 11A from a gas supply apparatus 46 via a supply tube 47a, and a combustion gas such as oxygen or an oxygen-rich gas is introduced to the primary and secondary combustion gas supply channels 13A and 14A from the gas supply apparatus 46 via supply tubes 47b and 47c. Further, the after-described additive is supplied to the supply channel for additive 12A as the feed portion from a supply apparatus 48 via a supply tube 49. It is thereby possible to let oxygen combustion flame inject from the front end of the oxygen combustion burner 1 and at the same time to let the additive blow out. The temperature at the center of the heating gas phase portion to be formed by the oxygen combustion flame injected from the oxygen combustion burner 1 in this embodiment, is from about 2,000 to 3,000°C, for example, in a case where the combustion flame is e.g. a hydrogen oxygen combustion flame.

From the front end 3 of the oxygen combustion burner 1, the flame F is injected downward, and into this flame F (i.e. the heating gas phase portion), the additive is supplied by pneumatic transportation or mechanical transportation from the supply channel for additive 12A as the feed portion of the oxygen combustion burner 1. It is thereby possible to melt the additive in the heating gas phase portion certainly and in a short time to obtain melted particles of additive U. In the following description, as mentioned above, the method of melting particles of e.g. the additive in the heating gas phase portion may be referred to as "the in-flight melting method".

Thus, in a case where an oxygen combustion burner 1 having a feed portion integrated therewith is used like this, the supply channel for additive 12A of the oxygen combustion burner 1 serves also as the feed portion, and it is not required to provide a feed portion separately. Further, into the flame F injected downward from the front end of the combustion burner 1, the additive is fed from the supply channel for additive 12A, whereby the flying direction of the additive is controlled to be downward, and it is possible to prevent the additive from flying out of the flame F.

In order to let the flame F inject downward from the front end 3 of the oxygen combustion burner 1 to let melted particles of additive U be formed, not only a space to let the flame F be formed below the front end 3 of the oxygen combustion burner 1, but also a space for the additive passed through the flame to be sufficiently melted and converted to melted particles of additive (i.e. a space to secure the length of flame F and to secure the retention time in the heating gas phase portion formed by the flame F) is required. Therefore, in this embodiment, in order to gain the space height beyond the ceiling wall 21t of the forehearth 20, a ceiling protrusion 21 T is provided to make up-and-down position adjustment of the oxygen combustion burners 1 possible. By providing the ceiling protrusion 21T and installing oxygen combustion burners 1 thereon, it is possible that the installation position of the oxygen combustion burners 1 is made sufficiently high from the liquid surface of the glass melt G0, and it is possible to prevent a non-molten state additive from being fed directly into the glass melt G0. Here, the melted particles of additive U are such that the majority of the fed additive has become to be in a molten state. Accordingly, even if the fed additive partly remains in a non-molten state, so long as such a non-molten additive will readily be melted in the glass melt after it is fallen into the glass melt below the heating gas phase portion, the presence of the additive in a non-molten state in the heating gas phase portion is permissible. Further, by reforming a part of the ceiling of a conventional forehearth to form a ceiling protrusion 21T, it is readily possible to install an additive melting unit 5, and therefore, it is possible to realize the glass melting furnace 10 of this embodiment by applying a small scale reforming to a conventional glass melting furnace. The height of the ceiling wall 21t being the ceiling of the forehearth 20 may be made to be as high as equal to the height of the ceiling protrusion 21T, but a wide space will thereby be formed above the glass melt G0, and it tends to be wasteful from the viewpoint of energy efficiency in consideration of maintaining the temperature of the glass melt G0 by the combustion burners 24.

Further, in a case where the distance between the liquid surface of the glass melt G0 and the ceiling wall 21 t (the ceiling) of the forehearth 20 is sufficient for conducting the in-flight melting method by means of the flame F from the oxygen combustion burners 1, the oxygen combustion burners 1 may be installed on the ceiling wall 21t (the ceiling) without forming the ceiling protrusion 21T. Further, with respect to the position of the oxygen combustion burners, they may be installed at any position of the melting furnace, so long as melted particles of additive U will be in the above-mentioned state.

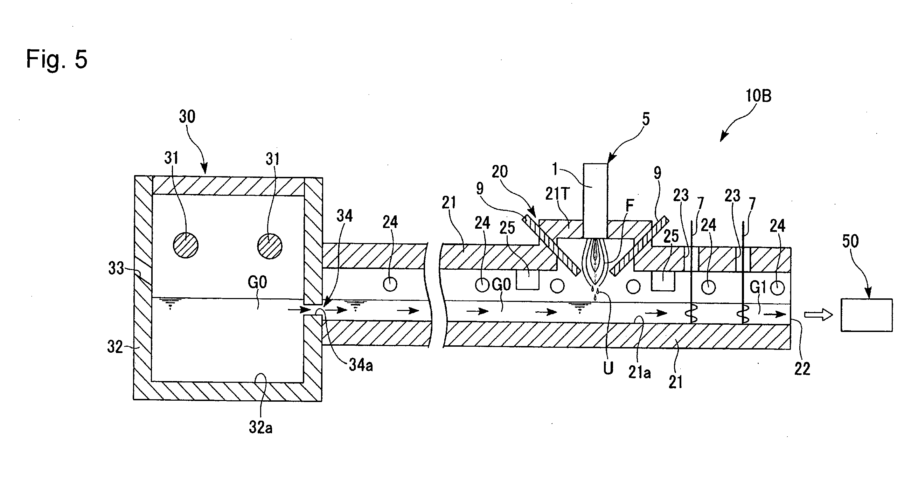

The heating means to form the heating gas phase portion is not limited to such oxygen combustion burners 1, and a multi-phase arc plasma generation apparatus constituted by at least a pair of electrodes to form thermal plasma may be installed on the ceiling protrusion 21T of the forehearth 21. Further, like in a glass melting furnace 10B shown in Fig. 5, both an oxygen combustion burner 1 and a multi-phase arc plasma generation apparatus constituted by at least a pair of electrodes 9 to form thermal plasma, may be formed on the forehearth 20. Further, the temperature of the thermal plasma and the flame F of the oxygen combustion burner 1 are preferably set to be at least 1,600°C, i.e. at least the melting temperature of silica sand which may be used as a component of the additive, in order to readily gasify and dissipate a gaseous component contained in the after-described additive and to facilitate a vitrification reaction. Thus, the additive fed into the forehearth 20 is readily gasified and dissipated by the flame F and/or thermal plasma and at the same time, heated at a high temperature to form liquid melted particles of additive U having a desired composition, which then descend and land on and will be added to the glass melt G0 flowing at the bottom 21 a of the forehearth 20. Further, in the case of the flame F, its center temperature is from 2,000 to 3,000°C in the case of oxygen combustion, and from 5,000 to 20,000°C in the case of the thermal plasma.

Along the forehearth 20, on the downstream side (the discharge port 22 side) of the installation position of the additive melting unit 5, via openings 23 formed in the ceiling wall 21t, six stirrers 7 are installed in two rows parallel to each other in the width direction of the forehearth 20 so that each row contains three stirrers. As the stirrers 7, conventional stirrers may be employed.

The additive fed into the feed portion (i.e. the supply channel for additive 12A in the oxygen combustion burners 1) of the additive melting unit 5 is melted in the heating gas phase portion formed by the flame F of the oxygen combustion burners 1 and becomes melted particles of additive U. Such melted particles of additive U descend in the forehearth 20, and they will be added to the glass melt G0 flowing at the bottom 21 a of the forehearth 20 and then stirred and homogenized by the stirrers 7 on the downstream side (the discharge port 22 side) of the additive melting unit 5. Thus, composition-modified glass melt G1 having the additive homogeneously added to the glass melt G0 is produced and will be discharged to the downstream side from the discharge port 22 as the discharge portion.

On the wall in the forehearth 20, a plurality of combustion burners 24 are installed, and by these burners 24, it is possible to maintain the temperature at a desired level, while preventing a decrease of the temperature of the glass melt G0 and composition-modified glass melt G1 flowing in the forehearth 20. As the oxygen combustion burners 24, conventional combustion burners may be employed, and e.g. an oxygen combustion burner having nozzles to supply fuel and combustion gas properly disposed, may be used.

Exhaust ports 25 connected to an external exhaust system (not shown) are formed slightly on the upstream side (the connection portion 34 side) and slightly on the downstream side (the discharge port 22 side) of the installation position of the additive melting unit 5 along the forehearth 20. Further, an exhaust port 25 is also formed on the furnace wall 21 in the vicinity of the stirrers 7, and via this exhaust port 25, a combustion gas is discharged. Exhaust ports are provided e.g. for the purpose of readily discharging a special combustion gas of oxygen combustion and for the purpose of controlling the gas stream or the furnace pressure in the forehearth 20.

In this specification, "upstream" and "downstream" mean the upstream and downstream in the flow direction of the glass melt G0 flowing from the connection portion 34 side towards the discharge port 22 side of the forehearth 20.

In this embodiment, the composition of the glass melt G0 is not particularly limited. Accordingly, it may be any of soda lime glass, mixed alkali type glass, borosilicate glass and alkali-free glass. The application of the glass product produced by using the glass melt of this embodiment is not limited to buildings or vehicles, but extends to various ones such as flat display panels, containers, table wares, etc.

In the case of soda lime glass to be used for plate glass for buildings or vehicles, the glass melt G0 preferably has a composition comprising, as represented by mass percentage based on oxides, from 65 to 75% of SiO₂, from 0 to 3% of Al₂O₃, from 5 to 15% of CaO, from 0 to 15% of MgO, from 10 to 20% of Na₂O, from 0 to 3% of K₂O, from 0 to 5% of Li₂O, from 0 to 3% of Fe₂O₃, from 0 to 5% of TiO₂, from 0 to 3% of CeO₂, from 0 to 5% of BaO, from 0 to 5% of SrO, from 0 to 5% of B₂O₃, from 0 to 5% of ZnO, from 0 to 5% of ZrO₂, from 0 to 3% of SnO₂ and from 0 to 0.5% of SO₃.

In the case of alkali-free glass to be used as a substrate for liquid crystal display or organic EL display, the glass melt G0 preferably has a composition comprising, as represented by mass percentage based on oxides, from 39 to 75% of SiO₂, from 3 to 27% of Al₂O₃, from 0 to 20% of B₂O₃, from 0 to 13% of MgO, from 0 to 17% of CaO, from 0 to 20% of SrO, and from 0 to 30% of BaO.

In the case of mixed alkali type glass to be used as a substrate for plasma display, the glass melt G0 preferably has a composition comprising, as represented by mass percentage based on oxides, from 50 to 75% of SiO₂, from 0 to 15% of Al₂O₃, from 6 to 24% of MgO+ CaO+ SrO+ BaO+ZnO, and from 6 to 24% of Na₂O+K₂O.

As another application, in the case of borosilicate glass to be used for e.g. heat resistant containers or laboratory utensils, the glass melt G0 preferably has a composition comprising, as represented by mass percentage based on oxides, from 60 to 85% of SiO₂, from 0 to 5% of Al₂O₃, from 5 to 20% of B₂O₃, and from 2 to 10% of Na₂O+K₂O.

The composition of the additive in this embodiment is not particularly limited, and a composition containing a modification component in addition to the above-described composition of the glass melt G0 may be used. The introduction form is basically an oxide, but it may be a fine powder of a metal.

The additive is one to be added for the purpose of e.g. changing the color of glass by adding a colorant, imparting a function to absorb ultraviolet ray or heat ray by adding ions to absorb a specific wavelength, imparting antibacterial activities by adding an antibacterial component (silver ions), accelerating crystallization by adding a nucleiforming material, opacifying by adding a phase separation-inducing component (phosphorus, fluorine), imparting a non-linear optical effect by introducing rare earth ions, supplementing a glass composition component which is volatile by melting, or imparting a glass composition component which is likely to be deteriorated if it takes time for melting.

The modification component contained in the additive may, for example, be a colorant component (a colorant) such as Fe, Ni, Co, Se, Cu, Ti, Ce or Pb, or a component to impart crystallizing properties or weather resistance, such as F, Ca, Mg or Zr.

The content of the modification component in the additive is not particularly limited and may be suitably changed, and it may be from 1 to 100% based on the additive to be fed. By a conventional method, it used to be difficult to sufficiently melt an additive when the additive contains a large amount of a modification component such as a colorant component. According to this embodiment, however, by feeding the additive into a heating gas phase portion of from 2,000 to 3,000°C formed by the flame F, it is possible to completely melt, in the heating gas phase portion, the additive containing at least 50 mass% of a modification component, in the case of e.g. iron oxide, and to supply it in a liquid state to the glass melt. Therefore, according to the present invention, it is possible to modify glass by using an additive containing a colorant at a high concentration, which used to be difficult to melt heretofore, and thus, the present invention is suitable for the production of deep-colored glass containing a colorant component at a high concentration.

According to the process for modifying a glass melt in this embodiment, specifically, it is possible to add a colorant component in an amount of from 0.1 to 20 mass% to 100 mass% of the glass melt.

The form of the additive to be fed to the feed portion (i.e. the supply channel for additive 12A of the oxygen combustion burner 1) may be a granular additive raw material prepared by mixing and granulating raw material for a glass melt having any one of the above-mentioned compositions and a modification component in the desired additive composition ratio of the powders of the respective components. In this specification, one prepared in the form of granules by mixing and granulating one sort or many sorts of raw material for the additive, may be referred to as the additive. Further, the form of the additive may be any one of glass frit, pellets and cullet made of glass with a composition having the above modification component incorporated to the above glass melt composition, or a mixture thereof. As another example, the additive may contain a single sort or plural sorts of oxides. For example, the additive may be a metal powder.

It is preferred to use granules of additive raw material, since it is thereby possible to melt, i.e. vitrify, the granules all at once in the flame and/or thermal plasma, whereby a workload of forming into frit, pellets, etc. after once producing glass having a desired composition, can be omitted.

The size of the additive in the form of particles, pellets, cullet, flakes, etc. to be fed to the feed portion, is preferably at most 1 mm. Here, "the size of the additive" is represented by an average particle diameter (weight average) in the case of granules, a circle-equivalent diameter in the case of glass frit, and a thickness of the thinnest portion in the case of pellets and glass cullet. By adjusting the size of the additive to be at most 1 mm, the entire additive fed into the high temperature heating gas phase portion formed by the flame F and/or thermal plasma, is sufficiently subjected to heat transfer, so that the additive can be completely melted to form melted particles of additive U. In the case of pellets and glass cullet, when the thickness of the thickest portion is at most 1 mm, the heat is transmitted to the entire additive, so that the entire additive will be completely melted. The size of glass frit as a colorant, which is commercially available, is usually from 1 to 10 mm in many cases, and it may be necessary to preliminarily pulverize it at the time of feeding it into the heating gas phase portion.

An example of granules of additive raw material, as the additive to be fed from the feed portion, is as follows, in a case where an example of alkali-free glass is used as the glass melt and Fe is contained as the modification component. Glass melt raw material powder particles of e.g. silica sand, alumina (Al₂O₃), boric acid (H₃BO₃), magnesium hydroxide (Mg(OH)₂), calcium carbonate (CaCO₃), strontium carbonate (SrCO₃) or barium carbonate (BaCO₃) and powder particles of e.g. FeO, Fe₂O₃ or Fe₃O₄ other than an iron content contained in other raw materials, are blended to agree with the desired additive composition ratio to obtain additive powder particles, which are then formed, for example, by a spray dry granulation method, into granules of from about 30 to 1,000 µm, to obtain additive raw material.

As the method for preparing the additive raw material from the above additive powder, a method such as a spray dry granulation method may be employed, and a granulation method is preferred wherein an aqueous solution having the additive raw material dispersed and dissolved therein, is sprayed into a high temperature atmosphere for drying and solidification. Such granules may be constituted solely by raw materials with a blend ratio corresponding to the desired additive component composition, but to such granules, a fine powder of glass cullet having the same composition may further be mixed and the resulting mixture may be used as additive raw material.

As an example of the method to prepare the additive raw material by such spray dry granulation, additive powders within a range of from 2 to 500 µm as the above-mentioned additive powders of various components are dispersed in a solvent such as distilled water to obtain a slurry, and this slurry is stirred, mixed and pulverized in a stirring apparatus such as a ball mill for a predetermined time and then subjected to spray dry granulation, whereby it is possible to obtain additive raw material wherein the above-mentioned additive powders of various components are substantially homogeneously dispersed.

Further, at the time of stirring the slurry by the stirring apparatus, for the purpose of improving the homogeneous dispersion of additive raw material powder particles and the strength of granulated raw material, it is preferred to mix a binder such as 2-aminoethanol, PVA (polyvinyl alcohol) or the like, and then conduct the stirring.

The additive raw material to be used in this embodiment may be formed by a dry granulation method such as a tumbling granulation method, a stirring granulation method or the like, other than by the above-described spray dry granulation method.

The average particle diameter (weight average) of the additive raw material is preferably within a range of from 30 to 1,000 µm. More preferably, additive raw material having an average particle diameter (weight average) within a range of from 50 to 500 µm is used, and additive raw material having an average particle diameter within a range of from 70 to 300 µm is further preferred.

The average particle diameter (weight average) of melted particles of additive U having the additive raw material melted, usually becomes to be about 80% of the average particle diameter of the additive raw material in many cases. The particle diameter of the additive raw material is preferably selected from the above mentioned range for such reasons that heating can thereby be accomplished in a short time, dissipation of a generated gas is easy, and variation in the composition among particles can be reduced.

Further, such additive raw material may contain, as the case requires, a refining agent, a colorant, a melting-assisting agent, an opacifying agent, etc. as auxiliary raw materials. Further, boric acid or the like in such additive raw material is likely to volatilize by heating as its vapor pressure at a high temperature is relatively high and therefore may be excessively added more than in the glass composition as the final product.

In this embodiment, in a case where a refining agent is contained as an auxiliary raw material, a refining agent containing one or more elements selected from chlorine (Cl), sulfur (S) and fluorine (F) may be added in a necessary amount.

Further, even if conventional refining agents such as oxides of Sb and As may show an effect to reduce bubbles, elements of such refining agents are elements which are not desirable from the viewpoint of reducing an environmental load, and it is preferred to reduce their use with a view to reducing the environmental load.

In the process for modifying a glass melt by means of the glass melting furnace 10 in this embodiment, a glass melt G0 melted in the melting tank 30 is introduced to the forehearth 20, and melted particles of additive U melted by the in-flight melting method, are added to the glass melt G0 flowing in the forehearth 20, followed by stirring, whereby it is possible to obtain composition-modified glass melt G1 having a homogeneous composition.

According to the process for modifying a glass melt in this embodiment, the additive can be instantaneously melted in the heating gas phase portion, and it is possible to melt even an additive containing a large amount of a colorant component which used to be difficult to melt heretofore. Further, melted particles of additive U melted in the heating gas phase portion descend and disperse in the glass melt G0, and the melted particles of additive U tend to readily melt into the glass melt G0, whereby it is possible to produce homogeneous composition-modified glass melt G1.

In the process for modifying a glass melt in this embodiment, the additive is melted in the heating gas phase portion at a high temperature (from 2,000 to 3,000°C in the case of flame F, or from 5,000 to 20,000°C in the case of thermal plasma), the temperature of melted particles of additive U thus melted, becomes to be a high temperature equal to or higher than the temperature (e.g. about 1,350°C) of the glass melt G0 flowing in the forehearth 20. Accordingly, it is thereby possible to facilitate stirring without lowering the temperature of the glass melt G0, and to produce composition-modified glass melt G1 having a homogeneous composition. Further, by adjusting the temperature of the heating gas phase portion, it is possible to freely adjust the temperature of melted particles of additive U and to form melted particles of additive U having a temperature or viscosity advantageous to mixing with the glass melt G0.

Further, the temperature of melted particles of additive U is set to be sufficiently high, so that it is less likely that the viscosity of the melted particles of additive U becomes low thereby to include bubbles at the time of stirring and mixing with the glass melt G0, whereby composition-modified glass melt G1 with excellent bubble-free quality is obtainable.

Further, since the additive is instantaneously melted in the heating gas phase portion by means of the in-flight melting method, the production time can be shortened as compared with a conventional production method, and it is possible to reduce energy consumption and to reduce exhaust gas.

Furthermore, the process for producing glass melt of the present invention provides the above-described advantageous effects, since it employs the above-described process for modifying a glass melt of the present invention.

As is different from conventional apparatus, the glass melting furnace 10 in this embodiment does not require a furnace to preliminarily melt the additive, and an additive melting unit may simply be installed on a forehearth of a conventional melting furnace, whereby the installation is simple. Further, a furnace to melt the additive is not separately required, and it is not required to change the composition of raw material for base glass to be fed upstream of the melting tank, and thus, as is different from conventional apparatus, it is not required to remove entire glass in the tank at the time of color change, and color change can be accomplished in a short time.

In this embodiment, it is also preferred to make the additive melting unit 5 attachable on and detachable from the forehearth 20. In such a case, usually as a conventional glass melting furnace, production of a glass melt may be carried out, and as the case requires, the additive melting unit 5 may be installed on the forehearth 20 to produce composition-modified glass melt.

Thus, with the glass melting furnace 10 in this embodiment, in a case where composition-modified glass melt having another composition is to be produced, the sort of the additive to be fed to the feed portion may simply be changed, or the additive melting unit 5 may simply be replaced. This is suitable for the production of colored glass such as glass for bottles, where it is required to cope with production of various sorts in small quantities.

In the above-described embodiment, an example has been shown wherein the melting tank 20 is provided with combustion burners 31, and by radiation heat of flame injected from such combustion burners 31, glass raw material is melted to form a glass melt G0.However, the present invention is not limited to such an example, so long as the glass raw material is melted by heating, and the heating source may be any of conventional ones including combustion burners, electric systems, plasma, etc.

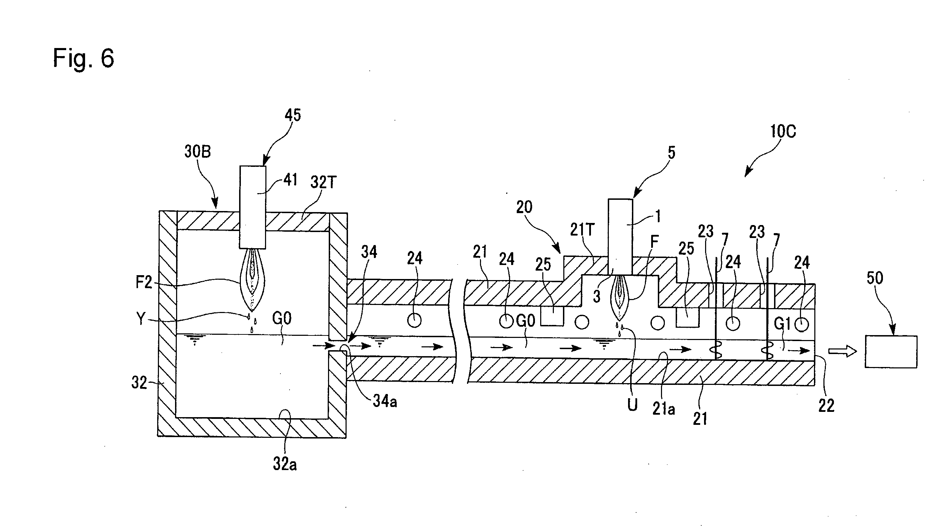

Fig. 6 is a vertical cross-sectional view illustrating another embodiment of the glass melting furnace according to the present invention. The glass melting furnace 10C shown in Fig. 6 is different from the glass melting furnace 10 in the above-described embodiment in that it is provided with a glass raw material melting unit 45 as a heating means for glass material in the melting tank. In Fig. 6, the same constituting elements as in the glass melting furnace 10 shown in Figs. 1 to 3 are identified by the same symbols, and their description will be omitted.

The glass melting furnace 10C in this embodiment comprises a melting tank 30B and a forehearth 20, and the melting tank 30B and the forehearth 20 are in communication with each other via a connection portion 34.

The melting tank 30B comprises a hollow furnace body 32 made of refractory bricks, an oxygen combustion burner 41 disposed through the ceiling 32T of the furnace body so that the flame injecting direction becomes downward, a raw material supply channel as the raw material feed portion to feed raw material for glass melt, which is formed integrally with the oxygen combustion burner 41, and the connection portion 34 to discharge the glass melt G0 melted in the furnace body 32 to the forehearth 20.

The oxygen combustion burner 41 and the raw material feed portion as the raw material supply channel formed integrally with the oxygen combustion burner 41, constitute a glass raw material melting unit 45. The construction of the glass raw material melting unit 45 is the same as the construction of the additive melting unit 5 in the glass melting furnace 10 in the above-described embodiment. By flame F2 of the oxygen combustion burner 41, a heating gas phase portion is formed below the raw material feed portion (the raw material supply channel of the oxygen combustion burner 41).

The construction of the oxygen combustion burner 41 is similar to the oxygen combustion burner 1 in the above-described embodiment, and it is the same construction except that in the oxygen combustion burner 1, the supply channel for additive 12A formed between the second nozzle 12 and the third nozzle 13 is replaced by a raw material supply channel.

In the melting tank 30B of such a form, the glass raw material is melted in the heating gas phase portion by means of an in-flight melting method to form liquid glass melted particle Y, which are then permitted to descend and deposited at the furnace bottom 32a, whereby it is possible to obtain a glass melt G0.

The furnace body 32 may be constructed so that, as the case requires, a heating means such as electrodes (not shown) is provided at the furnace bottom 32a to maintain the glass melt G0 deposited at the furnace bottom 32a in a molten state at the desired temperature (e.g. from about 1,400 to 1,500°C).

In the glass melting furnace 10C in this embodiment, the composition of the glass melt G0 melted in the melting tank 30B is the same as in the above-described embodiment.

As the glass raw material to be used in the in-flight melting method for glass raw material in the melting tank 30B in the glass melting furnace 10C in this embodiment, glass raw material having any one of the above-mentioned compositions, e.g. glass raw material in the form of granules obtained by mixing and granulating raw material powder particles of the above-mentioned various components, may be prepared.

The preparation method and the average particle diameter (weight average) of the glass raw material are the same as the preparation method and the average particle diameter (weight average) of the granules having additive raw material mixed in the above-described embodiment.

Further, in the melting tank 30B in the glass melting furnace 10 in this embodiment, the heating means to form the heating gas phase portion is not limited to the oxygen combustion burner 41 like the additive melting unit 5 in the above-described embodiment, and a multi-phase arc plasma generation apparatus constituted by at least a pair of electrodes to generate thermal plasma may be installed on the ceiling 32T of the furnace body 32, or both the oxygen combustion burner 41 and the multi-phase arc plasma generation apparatus may be installed on the ceiling 32T of the furnace body 32.

According to the glass melting furnace 10C in this embodiment, in addition to the effect of the glass melting furnace 10 in the above-described embodiment, the glass raw material can be melted by the in-flight melting method in the melting tank 30B to form a glass melt G0, whereby it is possible to further reduce energy consumption and to further reduce exhaust gas.

In each of the glass melting furnaces 10, 10B and 10C shown in Figs. 1 to 3, 5 and 6, the size of the forehearth 20 is not particularly limited and may suitably be changed to meet e.g. the size of the melting tank 30 or 30B. As an example, an example of the size of the forehearth 20 is shown below in a case where composition-modified glass melt G1 is produced by adding an additive in an amount of about 10 tons/day to a glass melt G0 in the production amount of about 100 tons/day. In the following example, the height of the glass melt G0 flowing at the bottom 21 a of the forehearth 20 was set to be 200 mm.

### [Forehearth 20]

- Length: 8,000 mm
- Width: 1,500 mm
- Internal height at the installation position of the oxygen combustion burners 1 (distance between bottom 21 a and the inner surface of ceiling protrusion 21 T): 1,000 mm
- Internal height at other than the installation position of the oxygen combustion burners 1 (distance between bottom 21 a and the inner surface of ceiling wall 21t): 600 mm

### [Oxygen combustion burners 1 (additive melting units 5)]

- Output: 300,000 Kcal/hx2 burners
- Installation position: 2L/3 from the upstream end against the total length L (8,000 mm) of the forehearth 20 (L/3 from the downstream end)

Here, in the present invention, the installation position of the oxygen combustion burners 1 (additive melting units 5) is not particularly limited, so long as it is within the forehearth 20. However, they are preferably installed on the ceiling on the downstream side of the forehearth 20. By installing them at the downstream side of the forehearth 20, the travelling direction of the glass melt G0 and the composition-modified glass melt G1 is limited to the downstream side and will not return to the upstream, so that it is made possible to present no influence over the temperature of the glass bank G0 or the flow of the glass melt G0 in the melting tank. Further, it is thereby possible to sufficiently refine the glass melt G0.Further, they are close to the region to be homogenized by the stirrers 7 installed downstream thereof, whereby it is easy to maintain a high temperature required at the region to be homogenized.

In the glass melting furnace in the above embodiment, a case is shown where two combustion burners 1 are installed in the forehearth 20, but the present invention is not limited to such a case. The number and the installation position of the oxygen combustion burners may suitably be changed. Further, the number of the stirrers 7 provided in the forehearth 20 is also not limited to 6, and the number and the position of the stirrers may also suitably be changed.

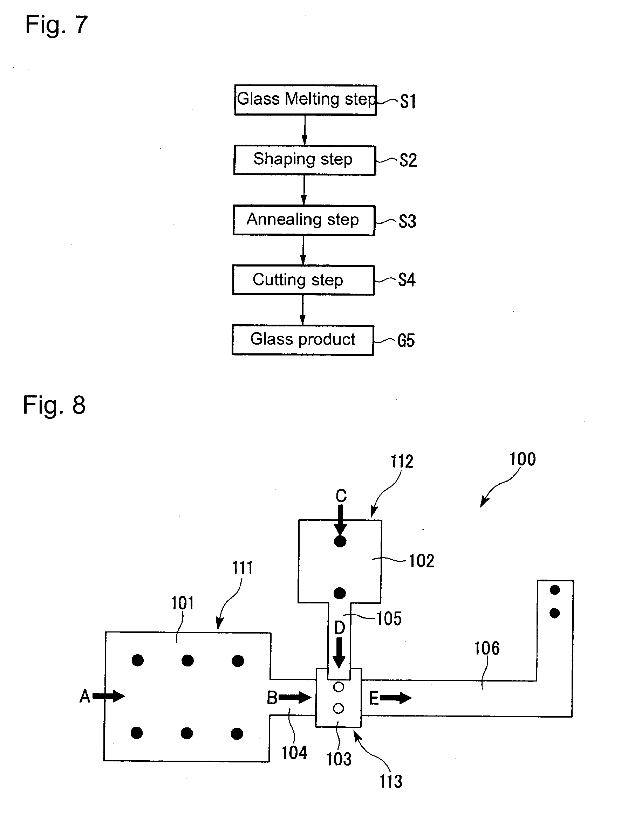

Fig. 7 is a flow chart showing an example of the process for producing a glass product by using the process for producing glass melt according to the present invention.

In order to produce a glass product in accordance with the process shown in Fig. 7, glass melt G1 being composition-modified glass melt is obtained by glass melting step S1 employing the above-described process for producing glass melt, then the glass melt G1 is sent to a forming apparatus 50 and formed into a desired shape by forming step S2, and then annealed by annealing step S3, followed by cutting into a necessary length by cutting step S4 to obtain a glass product G5.

Further, as the case requires, a step of polishing glass after forming is provided to produce a glass product G5.

According to the process for producing a glass product of the present invention, by using the above-described process for producing glass melt, it is possible to provide a homogeneous high quality glass product even in a case where the additive contains a modification component at a high concentration.

The apparatus for producing a glass product according to the present invention is an apparatus which comprises the above-described glass melting furnace 10, 10B or 10C, a forming means (forming apparatus) 50 for forming glass melt, installed downstream side of the glass melting furnace 10, 10B or 10C, and an annealing means for annealing glass after forming. Here, the forming means and the annealing means are within a range of known technology. For example, as the forming means, a forming apparatus such as a float process, a roll method, a fusion method or a downdraw method may be mentioned in the case of a glass plate, or a blow/blow molding method or a press/blow molding method may, for example, be mentioned in the case of bottle glass or container glass. Further, in a case where a high bubble-free quality is desired, a subatmospheric refining apparatus may be provided between the glass melting furnace 10, 10B or 10C and the forming means (forming apparatus) 50, as the case requires.

Among the above, a forming means using a float bath for the float process is preferred in that high quality glass sheets/plates within a wide range of thickness from thin glass sheets to thick glass plates can be produced. For example, as the annealing means, an annealing furnace provided with a mechanism to gradually lower the temperature of glass after forming, is usually used. The mechanism to gradually lower the temperature anneals glass after forming by supplying a heat quantity with its output controlled to a necessary position in the furnace by a combustion gas or an electrical heater. It is thereby possible to eliminate a residual stress resident in glass after forming.

The apparatus for producing a glass product of the present invention is provided with the above-described glass melting furnace, whereby it is possible to produce a homogeneous high quality glass product in a small scale as compared with conventional apparatus for producing composition-modified glass and without adding a melting tank for modification.

### INDUSTRIAL APPLICABILITY

The glass melting furnace of the present invention does not require a separate furnace to preliminarily melt an additive, and an additive melting unit may simply be installed in a forehearth of the melting furnace, whereby the installation is simple. Further, it is not required to change the composition of base glass raw material to be fed upstream of the melting tank, and therefore, it is not required to remove the entire glass melt in the tank at the time of color change. In the case of producing composition-modified glass melt of another composition, the sort of the additive to be fed to the feed portion may simply be changed, or the additive melting unit may simply be replaced, whereby the color change can be accomplished in a short time. This is suitable also for the production of colored glass such as glass for bottles where it is required to cope with production of many sorts in small quantities.

The glass melting furnace of the present invention is widely useful for the production of glass for buildings, glass for vehicles, glass for optical purposes, glass for medical purposes, glass for display apparatus, glass for bottles, glass for containers, glass beads and other glass products for general purposes.

The entire disclosure of Japanese Patent Application No. 2010-269643 filed on December 2, 2010 including specification, claims, drawings and summary is incorporated herein by reference in its entirety.

### REFERENCE SYMBOLS

1: oxygen combustion burner (heating means), 5: additive melting unit, 7: stirrer, 9: electrode (heating means), 10, 10B, 10C: glass melting furnace, 11: first nozzle, 11A: fuel gas supply channel, 12: second nozzle, 12A: supply channel for additive (feed portion), 13: third nozzle, 13A: primary combustion gas supply channel, 14: fourth nozzle, 14A: secondary combustion gas supply channel, 15: outer tube, 20: forehearth, 21: furnace wall, 21a: bottom, 21T: ceiling protrusion, 21t: ceiling wall, 22: discharge port (discharge portion), 23: opening, 24: combustion burner, 25: exhaust port, 30, 30B: melting tank, 31: combustion burner, 32: furnace body, 32a: furnace bottom, 32T: ceiling, 33: raw material feed portion, 34: connection portion, 41: oxygen combustion burner, 45: glass raw material melting unit, 50: forming apparatus (forming means), G0: glass melt, G1: composition-modified glass melt, F, F2: flame, U: melted particles of additive, Y: glass melted particle

## Claims

1. A glass melting furnace for adding an additive to a molten state glass to form composition-modified glass melt and discharging the composition-modified glass melt, which comprises:
a melting tank for melting glass raw material to form a molten state glass,
a forehearth in communication with the melting tank to introduce the glass melt from the melting tank and transport it to a discharge portion, said forehearth comprising a feed portion to feed an additive, and a heating means to form a heating gas phase portion above the liquid surface of the glass melt to convert the additive from the feed portion into melted particles of additive below the feed portion.

2. The glass melting furnace according to Claim 1, wherein the heating means is either one or both of an oxygen combustion burner to generate an oxygen combustion flame and a multi-phase arc plasma generation apparatus constituted by at least a pair of electrodes to generate thermal plasma.

3. The glass melting furnace according to Claim 2, wherein the oxygen combustion burner is provided with a supply channel for additive as the above feed portion.

4. The glass melting furnace according to Claim 2 or 3, wherein the distance between the front end of the oxygen combustion burner and the liquid surface position of the glass melt in the forehearth is at least a length required to convert the additive from the feed portion into melted particles of additive by the heating gas phase portion.

5. The glass melting furnace according to any one of Claims 1 to 4, wherein an upwardly protruded ceiling protrusion is formed at the ceiling of the forehearth, and the feed portion and the heating means are installed in the ceiling protrusion.

6. The glass melting furnace according to any one of Claims 1 to 5, which has, in the forehearth, a stirring means on the discharge portion side to the installation position of the feed portion.

7. A process for modifying a glass melt by adding an additive to a molten state glass to modify the glass melt, which comprises:
a step of melting glass raw material to form a glass melt, and
a step of feeding an additive into a heating gas phase portion above the liquid surface of the glass melt to melt the additive to form melted particles of additive, and adding the melted particles of additive to the glass melt to modify the composition of glass.

8. The process for modifying a glass melt according to Claim 7, wherein the heating gas phase portion is formed by either one or both of an oxygen combustion burner to generate an oxygen combustion flame and a multi-phase arc plasma generation apparatus constituted by at least a pair of electrodes to generate thermal plasma.

9. The process for modifying a glass melt according to Claim 8, wherein the heating gas phase portion is formed by the oxygen combustion burner having a supply channel for additive internally provided, and the additive is fed from the supply channel for additive to the heating gas phase portion.

10. The process for modifying a glass melt according to Claim 8 or 9, wherein the front end position of the oxygen combustion burner is set against the liquid surface position of the glass melt at a height required to convert the additive into the melted particles of additive by the heating gas phase portion.

11. The process for modifying a glass melt according to any one of Claims 7 to 10, wherein the average particle diameter of the additive is at most 1 mm by weight average.

12. The process for modifying a glass melt according to any one of Claims 7 to 11, wherein the additive contains a colorant component, and the amount of the colorant component is from 0.1 to 20 mass% to 100 mass% of the glass melt.

13. The process for modifying a glass melt according to any one of Claims 7 to 12, wherein the additive is a granule having additive raw material mixed.

14. The process for modifying a glass melt according to any one of Claims 7 to 12, wherein the additive is glass frit containing a modification component.

15. The process for modifying a glass melt according to any one of Claims 7 to 12, wherein the additive contains one sort or plural sorts of oxides.

16. The process for modifying a glass melt according to any one of Claims 7 to 15, wherein the step of melting glass raw material to form a glass melt is a step by an in-flight melting method of melting the glass raw material in a heating gas phase.

17. A process for producing glass melt, which comprises producing composition-modified glass melt by using the process for modifying a glass melt as defined in any one of Claims 7 to 16.

18. A process for producing a glass product, which comprises a step of producing glass melt by using the process for producing glass melt as defined in Claim 17, a step of forming the glass melt, and a step of annealing the glass after the forming.

19. An apparatus for producing a glass product, which comprises the glass melting furnace as defined in any one of Claims 1 to 6, a forming means for forming composition-modified glass melt produced by the glass melting furnace, and an annealing means for annealing the glass after the forming.
